## Europäisches Patentamt
## European Patent Office
## Office européen des brevets

(19)

(11) Numéro de publication: **0 202 958**
**B1**

(12) **FASCICULE DE BREVET EUROPEEN**

(45) Date de publication du fascicule du brevet:
**12.04.89**

(51) Int. Cl.⁴: **G 21 F 5/00**

(21) Numéro de dépôt: **86400226.6**

(22) Date de dépôt: **03.02.86**

(54) **Dispositif de transport, de positionnement et d'accostage d'un conteneur sous une fosse de chargement dans une installation nucléaire.**

(30) Priorité: **15.05.85 FR 8507427**

(43) Date de publication de la demande:
**26.11.86 Bulletin 86/48**

(45) Mention de la délivrance du brevet:
**12.04.89 Bulletin 89/15**

(84) Etats contractants désignés:
**AT BE CH DE GB IT LI LU NL SE**

(56) Documents cités:
**DE-A- 2 730 812**
**DE-A- 2 836 955**
**FR-A- 2 317 737**
**FR-A- 2 496 323**
**GB-A- 1 234 020**

(73) Titulaire: **CONSTRUCTIONS NAVALES ET INDUSTRIELLES DE LA MEDITERRANEE, 35, rue de Bassano, F-75008 Paris (FR)**

(72) Inventeur: **Dequesnes, Pierre, La Grange Avenue E. Roller, F-83200 Toulon (FR)**
Inventeur: **Franceschi, Jean-Claude, Clos Agapanthe Impasse Ricaud, F-83000 Toulon (FR)**
Inventeur: **Bartolo, Sylvain, Quartier Le Roustidou, F-83190 Ollioules (FR)**

(74) Mandataire: **Armengaud Ainé, Alain, Cabinet ARMENGAUD AINE 3 Avenue Bugeaud, F-75116 Paris (FR)**

ACTORUM AG

## Description

La présente invention est relative à un dispositif de chargement et/ou de déchargement de conteneurs de combustible irradié d'un réacteur nucléaire ou d'une usine de retraitement de combustible irradié, et elle vise plus particulièrement le dispositif de transport du conteneur, son système de positionnement et d'accostage sous une fosse de déchargement et/ou de chargement, et la traversée en fond de fosse d'une telle installation nucléaire.

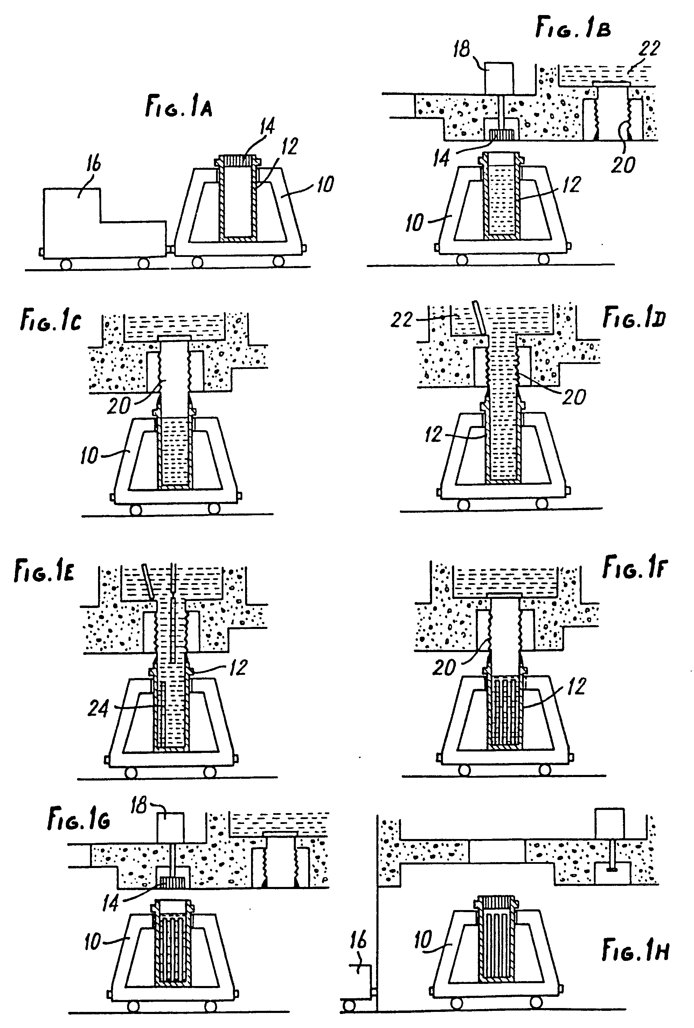

Pour bien faire comprendre les problèmes résolus par le dispositif selon cette invention, on se référera en premier lieu aux Figures 1A à 1H, qui illustrent de façon schématique les diverses étapes d'une opération de chargement d'un conteneur. Sur ces Figures, on voit en 10 le chariot portant le conteneur 12 muni d'un bouchon étanche 14, ce chariot étant manipulé à l'extérieur par un locotracteur 16. A l'intérieur, il est automateur, ce qui permet de l'amener successivement sous un système 18 assurant l'enlèvement du bouchon 14, et sous une pénétration 20, faisant office de sas avec une fosse ou une cellule 22.

Une opération de chargement comprend les étapes suivantes:

1 - amenée du chariot porte-conteneur au poste d'enlèvement du bouchon 14 (Figure 1B), en passant au préalable par un poste de préparation; puis

2 - sous la pénétration 20 (Figure 1C), afin d'assurer la continuité entre la fosse 22 contenant le combustible irradié 24 et le conteneur 12, préalablement rempli d'eau (Figure 1D);

3 - on effectue ensuite le chargement du conteneur 12 par le combustible irradié 24 (Figure 1E), puis la séparation du conteneur 12 de la fosse 22, suivie de la vidange de la pénétration 20 (Figure 1F); et enfin,

4 - on transfère le chariot sous le poste de pose et dépose du bouchon 14 (Figure 1G), pour la remise en place du bouchon de fermeture, suivie de l'évacuation du conteneur chargé (Figure 1H).

L'invention propose un certain nombre de perfectionnements apportée aux différents moyens mis en œuvre dans cette installation.

L'invention a donc pour objet un dispositif de transport, de positionnement et d'accostage d'un conteneur de combustible irradié sous une fosse et/ou une cellule de chargement et/ou de déchargement d'une installation nucléaire, du type dans lequel le conteneur est positionné sur un chariot que l'on amène successivement sous un poste de préparation de chargement, sous un poste d'enlèvement du bouchon du conteneur, et sous une pénétration assurant la liaison entre ladite fosse et/ou ladite cellule de chargement et/ou de déchargement et le hall où circule ledit chariot, ce dispositif étant caractérisé en ce que ledit chariot est constitué d'une charpente posée sur une plateforme roulante par l'intermédiaire d'un appui glissant et/ou roulant, et guidée à l'aide de rails latéraux, en ce que ledit conteneur est positionné sur ladite charpente par l'intermédiaire d'un plateau muni de moyens pour régler l'altitude et l'horizontalité de la face supérieure dudit conteneur, le positionnement de ce dernier selon les axes transversal et longitudinal étant obtenu à l'aide d'un gabarit fixé sur le bâti du conteneur et coopérant avec des axes-repères portés par la tête du chariot, en ce qu'on prévoit des plaques de protection blindées pour réduire les rayonnements, lors des opérations de chargement du conteneur, et en ce que l'étanchéité entre ladite fosse de chargement et/ou de déchargement et le conteneur est assurée à l'aide d'un soufflet métallique à double paroi, qui assure la continuité de l'étanchéité au niveau de la face d'appui du bouchon du conteneur.

D'autres caractéristique et avantages de cette invention ressortiront de la description faite ci-après en référence aux dessins annexés, qui en illustrent divers exemples de réalisation dépourvus de tout caractère limitatif. Sur les dessins:

les Figures 1A à 1H illustrent les principales étapes de l'opération de chargement d'un conteneur décrites ci-dessus;

la Figure 2 est une vue schématique, en coupe frontale, du chariot porte-conteneur;

la Figure 3 est une vue schématique en coupe représentant le dispositif de positionnement du conteneur sur son chariot;

la Figure 4 est une vue schématique, en coupe frontale, des protections biologiques sur le chariot;

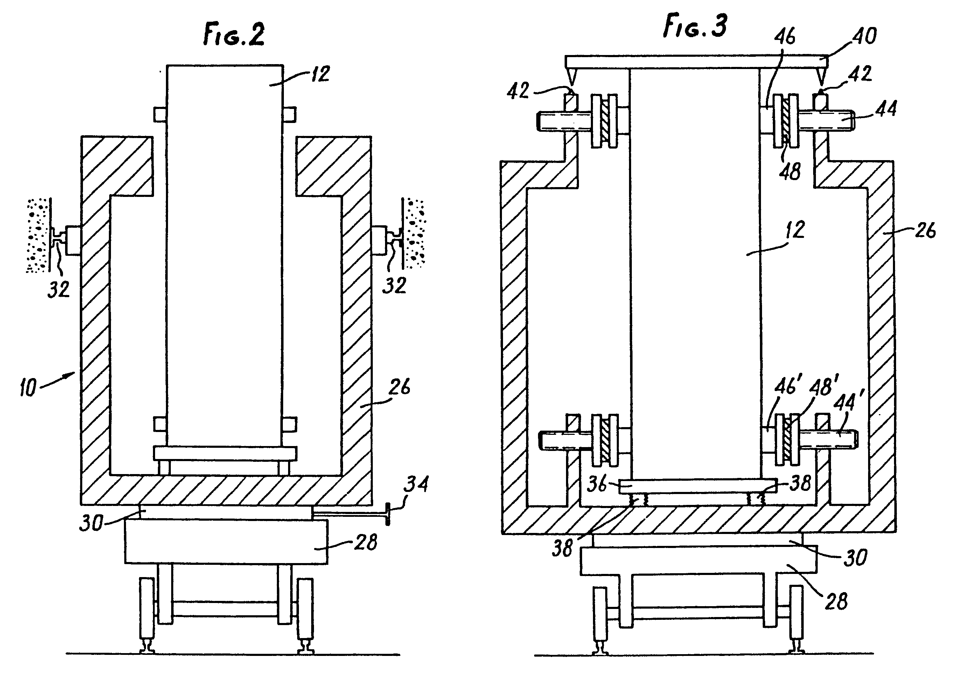

la Figur 3 représente, en coupe, la chaise-support du bouchon du conteneur;

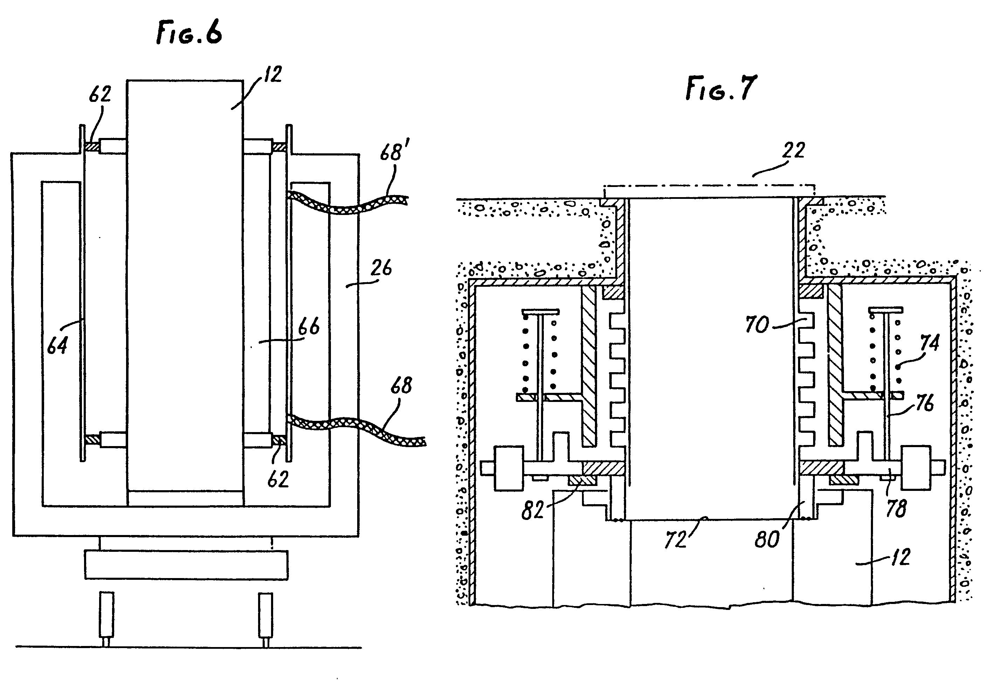

la Figure 6 est une vue en coupe des moyens de refroidissement du conteneur;

la Figure 7 représente, en coupe, les moyens de pénétration accostés au conteneur;

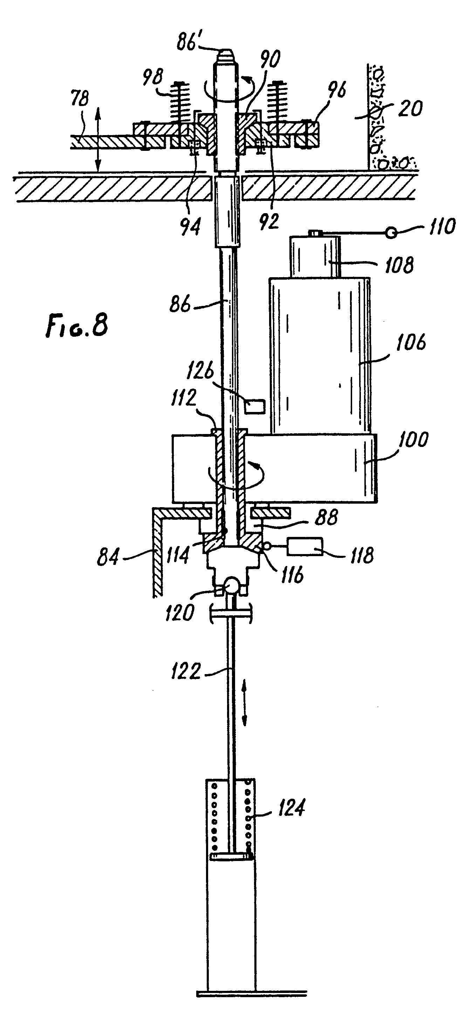

la Figure 8 illustre de façon schématique le dispositif d'accostage; et,

la Figure 9 représente le limiteur d'effort des mécanismes d'accostage.

On se réfère en premier lieu aux Figures 2 et 3, qui représentent le chariot 10 assurant le transport du conteneur 12 aux différentes postes illustrés par les Figures 1A à 1H.

Ce chariot 10 se compose essentiellement d'une charpente 26, posée sur une plateforme roulante 28 par l'intermédiaire d'un appui glissant et/ou roulant 30, qui est conçu de façon à permettre un déplacement limité, perpendiculaire au sens de roulement de la plateforme, entre la charpente 26 et ladite plateforme roulante 28, lors de l'introduction du chariot 10 dans le hall de chargement du conteneur 12. Grâce à cette caractéristique, le chariot peut circuler aussi bien sur des voies de roulement du type chemin de fer, avec les jeux nécessaires pour accepter les contraintes (de rayon de courbure, de devers de voie, etc.), que sur des voies de roulement, de réalisation et de montage précis, prévues dans le hall de chargement où circule le chariot. Le centrage latéral est assuré à l'aide de rails de guidage latéraux 32, et l'on prévoit des moyens de verrouillage 34, conçus de façon à permettre ou supprimer la liberté de mouvement latéral, suivant que le chariot est à l'extérieur ou à l'intérieur du hall.

Le conteneur 12 est positionné sur la charpente 26 du chariot par l'intermédiaire d'un plateau 36 sur lequel il repose (Figure 3), et qui comporte des moyens 38, par exemple des vérins, qui permettent de régler l'altitude et l'horizontalité de la face supérieure du conteneur. Le positionnement du conteneur selon les axes longitudinal et transversal est obtenu par un gabarit 40, fixé sur la tête du conteneur 12, et qui coopère avec des axes 42, 42, matérialisés sur la partie supérieure de la charpente 26 du chariot, des moyens de réglage étant prévus. Dans cet exemple de réalisation, ces moyens de réglage sont réalisés sous la forme de systèmes vis-écrou 44, 44', placés respectivement aux droits des tourillons supérieurs 46 et inférieurs 46' du conteneur 12. Selon l'invention, les systèmes vis-écrou 44, 44' assurent non seulement le positionnement du conteneur, mais en outre, ils permettent de le maintenir et de résister aux efforts dûs à un séisme. Enfin, un système d'amortissement élastique 48, 48', interposé entre chaque tourillon du conteneur et chaque système vis-écrou, permet un déplacement dû à une dilation radiale du conteneur, provoquée par l'échauffement, après le chargement du conteneur en combustible irradié.

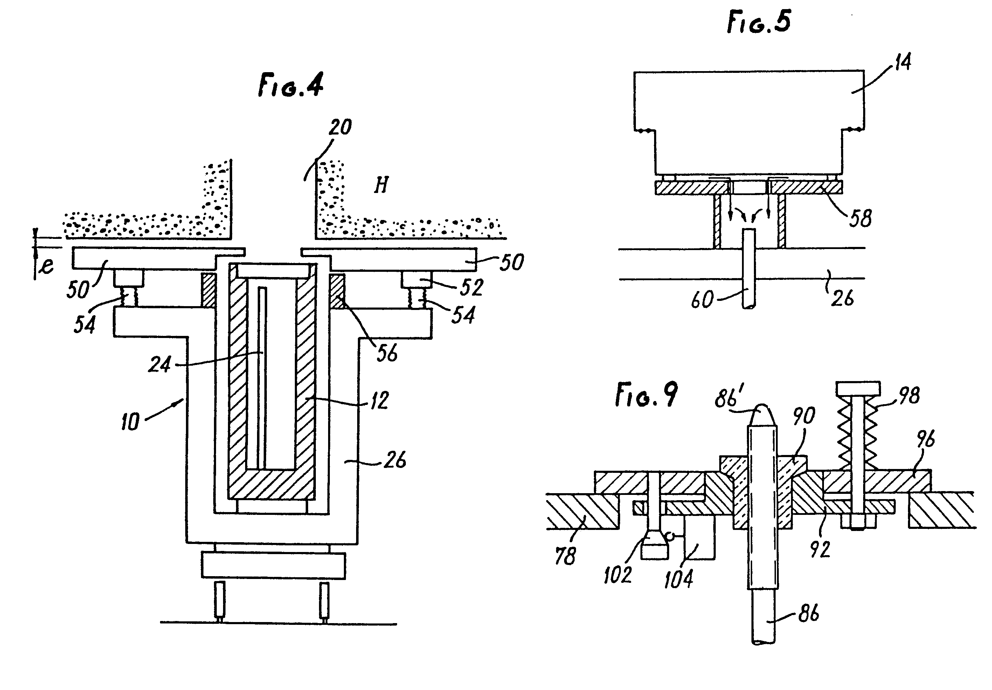

Lors de la translation du chariot depuis la pénétration (Figure 1C) jusqu'au poste de remise en place du bouchon du conteneur (Fig. 1G), il est nécessaire d'assurer la protection à l'encontre des rayonnements émis par les combustibles irradiés chargés dans le conteneur, ce dernier étant alors dépourvu de son bouchon d'obturation. Cette radioprotection, conformément à une autre caractéristique de cette invention, est obtenue à l'aide de plaques de protection blindées mobiles, représentées schématiquement en 50 (Fig. 4), qui sont montées sur la partie supérieure de la charpente 26 du chariot 10 de telle manière qu'un écart minimal e soit prévu entre le plafond du hall de chargement H et lesdites plaques de protection 50, la valeur de cet écart minimal étant réglée par un dispositif mécanique connu, tel que des vérins 54 par exemple. Selon l'invention, ces plaques de protection blindées permettent également de réduire les rayonnements du combustible irradié lorsque celui-ci passe dans la pénétration 20, lors du chargement du conteneur (poste Figure 1E). Selon l'invention, les plaques de protection blindées sont munies de moyens à commande manuelle ou mécanisée, représentés schématiquement en 52, qui permettent de rapprocher ou d'éloigner les plaques 50 l'une de l'autre, de manière à les refermer l'une sur l'autre pour effectuer la mise en place ou l'enlèvement du conteneur sur son chariot. Les plaques de protection blindées 50 s'emboîtent et recouvrent en partie la face supérieure du conteneur 12, un jeu entre les plaques et le conteneur étant prévu pour permettre une dilatation verticale du conteneur, due à son échauffement après le chargement en combustible. On peut également prévoir une protection blindée supplémentaire contre les rayonnements, schématisée en 56, qui est rapportée soit sur le conteneur 12, soit sur la charpente 26 du chariot, ou qui est intégrée à la charpente, afin de compléter la radioprotection en tête du conteneur, lorsque le bouchon du conteneur est enlevé.

Selon une autre caratéristique de cette invention (Fig. 5), on prévoit une chaise-support 58 du bouchon 14 du conteneur, cette chaise étant disposée sur la charpente 26 du chariot. La chaise 58 permet de déposer le bouchon du conteneur sur le chariot après l'avoir enlevé du conteneur, pendant que celui-ci est accosté sous la pénétration 20. Cette caractéristique permet d'éviter de laisser le bouchon de fermeture suspendu pendant les opérations d'accostage et de chargement du conteneur, et d'examiner et de changer éventuellement les joints d'étanchéité du bouchon. On peut, selon l'invention, prévoir un dispositif d'aspiration 60 sur la chaise-support 58 (Fig. 5), pour éviter toute dissémination de la contamination de la face inférieure du bouchon.

Selon l'invention, tous les ménanismes du chariot, de la pénétration, du levage du bouchon, sont conçus de façon à s'adapter aux différents types de conteneurs, par simple adjonction de pièces d'adaptation, permettant de compléter les écarts dimensionnels et la protection.

Pour des raisons de sécurité, notamment dans le cas d'un arrêt incidentel des opérations, après un chargement du conteneur en combustible irradié, il est nécessaire de refroidir le conteneur. A cet effet (Fig. 6), l'invention prévoit un système de refroidissement du conteneur 12 qui comprend une virole 64, intégrée ou rapportée à poste fixe sur la charpente 26 du chariot, et qui recouvre le conteneur sur toute la hauteur de ses ailettes de refroidissement 66, le refroidissement étant assuré par une circulation d'eau dans l'espace compris entre la virole 64 et le conteneur, cette circulation étant obtenu par des canalisations flexibles 68, 68'. L'étanchéité inférieure et supérieure de la virole sur le conteneur est assurée par des joints classiques 62.

La continuité de l'étanchéité entre la fosse de chargement ou de déchargement 22 et le conteneur 12 est assuré, comme connu p.e. du brevet français FR-A-2 496 323, à l'aide d'un soufflet métallique 70 (Fig. 7). Selon l'invention, on assure l'étanchéité entre le soufflet 70 et le conteneur 12 au niveau de la face d'appui 72 de ce dernier recevant le bouchon, afin d'éviter toute contamination de la partie supérieure du conteneur.

Le système de maintien de soufflet 70 est décrit dans le brevet français n° 8 026 360, déposé le 12 décembre 1980 et publié sous le n° 2 496 329, au nom de la présente titulaire. Ce système comprend une série de ressorts 74, maintenant le soufflet 70 dans sa position repos, qui exercent une traction sur des tiges 76 dont les extrémités inférieures respectives sont solidaires d'une bride 78, dite bride d'accostage, qui assure la liaison avec la bride porte-joint 80 et l'extrémité inférieure du soufflet. Selon l'invention, le soufflet métallique 70 peut être démonté par le bas, sans qu'il soit nécessaire de démonter les ressorts 74 et la bride 78, par démontage d'une bride inférieure 82 qui maintient en place l'ensemble du système.

On décrira maintenant, en référence à la Figure 8, les moyens qui, dans cet exemple de réalisation, sont montés sur une virole 84 du chariot 10, et qui permettent, une fois le chariot positionné sous la pénétration 20, d'accrocher le sofflet 70 et de le tirer vers le bas pour appliquer la bride porte-joints 80 sur la bride supérieure du conteneur, et assurer la continuité de l'étanchéité réalisée par le soufflet. Ces moyens, qui sont similaires à ceux décrits dans les brevets français FR-A-2 496 232 et FR-A-2 496 329, consistent en quatre ensembles identiques à celui illustré par la Figure 8, étant bien entendu que leur nombre peut varier en fonction de l'effort devant être exercé pour tirer le soufflet.

Chaque ensemble comprend une vis 86 en acier traité, munie d'un embout d'introduction 86' en forme de tronc de cône, l'extrémité inférieure de cette vis étant pourvue d'une butée à rotule ou à rouleaux 88, assurant la reprise des efforts axiaux. Chaque vis 86 coopère avec un écrou à rotule 90, prévu sur la bride d'accostage 78. Dans l'exemple de réalisation représenté ici, chaque écrou à rotule 90 est encastré dans une embase 92, sa mise en rotation étant empêchée par ledit encastrement, tout en laissant subsister un jeu assurant une liberté suffisante pour le mouvement de rotule de l'écrou 90. Chaque écrou 90 est appliqué sur l'embase 92 par des ressorts 94, qui exercent une légère pression sur l'écrou, permettant de faciliter la prise de la vis 86 lors du début du vissage, décrit plus loin. L'embase 92 est montée sur une bride de réglage 96 par l'intermédiaire des dispositifs élastiques, constitués ici par des rondelles ressorts 98, qui ont une double fonction:

1 - protéger les réducteurs 100 du mécanisme d'entraînement des vis 86, décrits plus loins, lors de l'arrêt en butée mécanique;

2 - assurer la libre dilatation du conteneur tout en restant verrouillé, sans introduire de nouvelle contrainte excessive dans le système.

La bride de réglage 96 permet en outre de positionner l'axe de l'écrou 90 par rapport à l'axe de la vis 86, le chariot servant de gabarit.

Selon l'invention, les dispositifs à vis décrits ci-dessus sont conçus de façon à accepter un décalage important entre l'axe de l'écrou 90 et celui de la vis 86, afin d'obtenir une latitude de positionnement plus grande du chariot sous la pénétration 20. A cet effet, la rotule de l'écrou 90 est conçu de façon à permettre un déplacement du chariot d'au moins 4 mm par rapport à la pénétration, lors d'un séisme, tout en continuant d'assurer l'étanchéité.

Toujours selon l'invention (Figure 9), les dispositifs élastiques constitués par les rondelles-ressorts 98 sont utilisés comme système limiteur d'effort au contact bride 96-conteneur, en mesurant le déplacement relatif entre la bride de réglage 96 et l'embase 92. A cet effet, l'invention prévoit une came 102, montée sur la bride 96, et un contact électrique 104 sur l'embase 92, assurant la détection dudit déplacement relatif (bien entendu, on peut, sans sortir du cadre de l'invention, prévoir une disposition inverse, en montant la came 102 sur l'embase 92, et le contact 104 sur la bride 96). Au déplacement relatif ainsi détecté correspond un effort dû à la compression du dispositif classique. Chaque vis 86 s'arrête en position de verrouillage grâce à l'information donnée par le contact électrique 104, actionné par la came 102.

Chaque vis 86 est entraînée en rotation par un groupe moteur 106-réducteur 100, ce groupe moto-réducteur comportant un système de freinage 108 à déblocage manuel 110. L'entraînement de la vis 86 est obtenu par l'intermédiaire d'un fourreau 112 claveté sur le réducteur 100, deux rainures et deux clavettes 114 assurant la liaison en rotation entre la vis 86 et ce fourreau 112. Ce dernier est guidé par l'arbre creux du réducteur 100, et il vient en appui sur la butée à rotule ou à rouleau 88, fixée sur la virole 84 du chariot, ce qui permet d'introduire tous les efforts axiaux dans le chariot, protégeant ainsi le réducteur.

Le fourreau 112 assure le calage angulaire du premier filet de la vis 86 par l'intermédiaire d'une came 116 et d'un dispositif électrique 118, le moteur synchrone 106 assurant le mouvement en rotation. L'extrémité inférieure de la vis 86 est fixée, par une liaison articulée 120, à l'extrémité de la tige 122 d'un vérin pneumatique à double effet 124. Le système décrit ci-dessus étant identiques au système correspondant décrit dans le brevet français précité, on n'en décrira pas le fonctionnement, le lecteur étant prié de se reporter à la description correspondante faite dans ce brevet antérieur.

Selon l'invention, on prévoit un dispositif de comptage de tours 126 sur chaque système de vis, tel que 86, pour déterminer et signaler une éventuelle désynchronisation de la rotation des systèmes de vis, toute désynchronisation de l'un des systèmes de vis entraînant l'arrêt de toutes les vis.

Selon l'invention, dans le cas d'un incident sur une vis, il est possible de mettre hors service la vis diamétralement opposée et de continuer la manœuvre sur les deux autres vis, soit pour verrouillage en vue d'assurer l'étanchéité, soit pour déverrouillage, en vue d'assurer le désaccostage du conteneur de la pénétration.

Selon l'invention, on peut prévoir une commande manuelle de secours, qui peut être accouplée sur chaque vis, de manière à pouvoir accoupler ou désaccoupler manuellement.

Enfin, selon l'invention, dans le cas d'un grippage de la vis dans l'écrou, il est possible de tronçonner la vis sous les plaques de protection blindées, ce système étant tel qu'après désaccouplement du soufflet du conteneur, la partie de la vis grippée dans l'écrou n'empêche pas la translation du conteneur sur son chariot, et donc une remise en position «sécurité» du système.

Il demeure bien entendu que cette invention n'est pas limitée aux divers exemples de réalisation décrits et représentés, mais qu'elle englobe toutes les variantes.

## Revendications

1. Dispositif de transport, de positionnement et d'accostage d'un conteneur de combustible irradié sous une fosse et/ou une cellule de chargement et/ou de déchargement d'une installation nucléaire, du type dans lequel le conteneur est positionné sur un chariot que l'on amène successivement sous un poste de préparation de chargement, sous un poste d'enlèvement du bouchon du conteneur, et sous une pénétration assurant la liaison entre ladite fosse et/ou ladite cellule de chargement et/ou de déchargement et le hall où circule ledit chariot, ce dispositif étant caractérisé en ce que ledit chariot (10) est constitué d'une charpente (26) posée sur une plateforme roulante (28) par l'intermédiaire d'un appui glissant et/ou roulant (30) et guidée à l'aide de rails latéraux (32), en ce que ledit conteneur (12) est positionné sur ladite charpente (26) par l'intermédiaire d'un plateau (36) muni de moyen (38) pour régler l'altitude et l'horizontalité de la face supérieure dudit conteneur (12), le positionnement de ce dernier selon les axes transversal et longitudinal étant obtenu à l'aide d'un gabarit (40) fixé sur la tête du conteneur et coopérant avec des axes-repères (42) portés par la tête du chariot, en ce qu'on prévoit des plaques de protection blindées (50, 56) pour réduire les rayonnements lors des opérations de chargement du conteneur, et en ce que l'étanchéité entre ladite fosse de chargement et/ou de déchargement et le conteneur est assuré à l'aide d'un soufflet métallique à double paroi (70), qui assure la continuité de l'étanchéité au niveau de la face d'appui du bouchon (14) du conteneur.

2. Dispositif selon la revendication 1, caractérisé en ce qu'on prévoit des moyens de verrouillage (34) pour permettre ou supprimer ladite liberté de mouvement latéral du chariot, obtenue par ledit appui glissant et/ou roulant.

3. Dispositif selon l'une des revendications 1 ou 2, caractérisé en ce qu'on prévoit des moyens de réglage du positionnement du conteneur selon les axes longitudinal et transversal, ces moyens pouvant être réalisés sous la forme de systèmes vis-écrou (44, 44') placés respectivement aux droits des tourillons supérieur (46) et inférieur (46') du conteneur (12), un système d'amortissement élastique (48, 48') étant en outre interposé entre chaque tourillon de conteneur et chaque système vis-écrou, pour autoriser un déplacement résultant d'une dilatation radiale du conteneur.

4. Dispositif selon l'une quelconque des revendications 1 à 3, caractérisé en ce que les plaques de protection blindées (50) sont munies de moyens à commande manuelle ou mécanisée (52) pour rapprocher ou éloigner lesdites plaques (50) l'une de l'autre, afin de les refermer l'une sur l'autre, lesdites plaques, en s'emboîtant, venant recouvrir la face supérieure du conteneur.

5. Dispositif selon la revendication 4, caractérisé en ce que lesdites plaques de protection blindées (50) sont montées sur la partie supérieure de la charpente du chariot de manière qu'un écart minimal (e) soit ménagé entre le plafond du hall de chargement (H) et lesdites plaques de protection, la valeur de cet écart étant réglée par un système mécanique (54).

6. Dispositif suivant la revendication 1, caractérisé en ce qu'une protection blindée supplémentaire (56) contre les rayonnements du combustible irradié est rapportée sur le conteneur, ou rapportée et/ou à demeure sur la charpente, pour compléter les manques de protection en tête du conteneur quand son bouchon est enlevé.

7. Dispositif selon l'une quelconque des revendications précédentes, caractérisé en ce qu'on prévoit une chaise-support (48) pour le bouchon (14) du conteneur, cette chaise étant disposée sur la charpente (26) et pouvant comporter des moyens d'aspiration (60) pour éviter toute dissémination de la contamination de la face inférieure du bouchon.

8. Dispositif selon l'une des revendications précédentes, caractérisé en ce qu'on prévoit un système de refroidissement du conteneur (12) qui comprend une virole (64) sur la charpente (26) du chariot, et qui recouvre le conteneur sur toute la hauteur de ses ailettes de refroidissement (66), une circulation d'eau étant assurée dans l'espace compris entre ladite virole et ledit conteneur.

9. Dispositif selon l'une quelconque des revendications précédentes, caractérisé en ce que le soufflet métallique (70) peut être démonté par le bas grâce à une bride inférieure démontable (82) qui maintient en place l'ensemble du système, connu par ailleurs, assurant le maintien dudit soufflet.

10. Dispositif selon l'une quelconque des revendications précédentes, caractérisé en ce que le dispositif, de type connu, à écrou à rotule (90) et vis (86), assurant les déplacements du soufflet (70), est conçu de façon à accepter un décalage important entre l'axe dudit écrou et celui de la vis, ceci afin de permettre un déplacement entre le chariot portant le conteneur et la pénétration (20) tout en continuant d'assurer l'étanchéité.

11. Dispositif selon l'une quelconque des revendications précédentes, caractérisé en ce que les dispositifs élastiques (98), servant à absorber la dilatation verticale du conteneur, sont conçus de façon à servir de limiteur d'effort au verrouillage en mesurant un déplacement relatif proportionnel à la flèche du dispositif élastique à l'aide d'une came (102) coopérant avec un contact électrique (104) qui détecte ledit déplacement relatif.

12. Dispositif selon l'une quelconque des revendications précédentes, caractérisé en ce qu'on prévoit un dispositif de comptage de tours (126) sur chaque système de vis (86) assurant les déplacements du soufflet, pour déterminer et signaler toute désynchronisation de la rotation desdits systèmes de vis, une détection de la désynchronisation d'un système de vis entraînant l'arrêt de tous les autres systèmes.

13. Dispositif selon l'une quelconque des revendications précédentes, caractérisé en ce qu'on prévoit une commande manuelle de secours pouvant être accouplée sur chaque système de vis (86), pour obtenir un accouplement ou un désaccouplement manuel du conteneur avec la pénétration (20).

**Patentansprüche**

1. Transport-, Positionier- und Verbindungsvorrichtung für einen Behälter für strahlenden Brennstoff unter einem Schacht und/oder einer Kammer zum Be- und/oder Entladen einer nuklearen Anlage, bei der der Behälter auf einem Wagen transportiert wird, den man nacheinander unter eine Station zur Vorbereitung der Beladung, unter eine Vorrichtung zum Abheben des Deckels vom Behälter und unter einer Öffnung zur Verbindung zwischen dem Schacht und/oder der Kammer zum Be- und/oder Entladen und dem Fahrschacht des Wagens fährt, dadurch gekennzeichnet, daß der Wagen (10) aus einem Gestell (26) besteht, das mittels eines Gleit- oder Rollenlagers (30) auf einem Fahrgestell (28) befestigt ist und durch seitliche Schienen (32) geführt wird, daß der Behälter (12) auf der Gestell (26) mittels einer Tragplatte (36) angebracht ist, die eine Stelleinrichtung zur Regulierung der Höhe und der horizontalen Lage der Oberseite des Behälters (12) aufweist, wobei diese Stellung relativ zur Längs-und Querachse mit Hilfe einer Meßlehre (40) eingestellt wird, die an der Oberseite des Behälters befestigt ist und mit Achs-Marken (42) zusammenwirkt, die sich auf der Oberseite des Wagens befinden, daß gepanzerte Schutzplatten (50, 56) zur Verminderung der Strahlenbelastung beim Beladen des Behälters vorgesehen sind, und daß die Abdichtung zwischen dem Be- und/oder Entladeschacht und dem Behälter durch einen doppelwandigen Metallbalg (70) sichergestellt wird, so daß eine ständige Abdichtung zur Auflagefläche des Deckels des Behälters besteht.

2. Vorrichtung nach Anspruch 1, dadurch gekennzeichnet, daß eine Verriegelungsvorrichtung (34) vorgesehen ist, welche die seitliche Bewegung des Wagens, die durch das Gleit- und/oder Rollerlager erreicht wird, ermöglicht oder verhindert.

3. Vorrichtung nach einem der Ansprüche 1 oder 2, dadurch gekennzeichnet, daß eine Verstelleinrichtung für die Position des Behälters relativ zu seiner Längs- und Querachse vorgesehen ist, wobei diese Verstelleinrichtung vorzugsweise nach Art einer Schraube-Mutter-Verbindung (44, 44') ausgebildet ist und beiseitig an einem oberen und unteren Anschlag (46, 46') am Behälter anliegt, und wobei außerdem je ein elastischer Dämpfer (48, 48') zwischen jedem Anschlag am Behälter und jeder Schraube-Mutter-Verstellvorrichtung angebracht ist, um eine radiale Verstellung des Behälters zu ermöglichen.

4. Vorrichtung nach einem der Ansprüche 1 bis 3, dadurch gekennzeichnet, daß die gepanzerten Schutzplatten (50) mit einer Steuereinrichtung, die von Hand oder mechanisch (52) betätigt wird, versehen sind, und diese Platten (50) einander anzunähern oder voneinander zu entfernen, mit dem Ziel, eine mit der anderen zu überdecken, so daß die Platten sich ineinander verschachtelnd die Oberseite des Behälters bedecken.

5. Vorrichtung nach Anspruch 4, dadurch gekennzeichnet, daß die gepanzerten Schutzplatten (50) auf dem oberen Teil des Tragegestells des Wagen so befestigt sind, daß ein Mindestabstand (e) zwischen der Decke des Laderaums (h) und den Schutzplatten verbleibt, wobei die Größe dieses Abstandes durch eine mechanische Einrichtung eingestellt wird.

6. Vorrichtung nach Anspruch 1, dadurch gekennzeichnet, daß eine zusätzliche Schutzvorrichtung (56) gegen die Strahlenbelastung durch den strahlenden Brennstoff auf den Behälter und/oder auf dem Tragegestell fest angeordnet ist, um den Schutz an der Oberseite des Behälters zu vervollständigen, wenn der Deckel abgehoben wird.

7. Vorrichtung nach einem oder mehreren der vorstehenden Ansprüche, dadurch gekennzeichnet, daß eine Stützvorrichtung (58) für den Deckel (14) des Behälters vorgesehen ist, wobei diese Stützvorrichtung auf dem Tragegestell (26) angeordnet ist und vorzugsweise eine Absaugvorrichtung (60) aufweist, um jegliche Verbreitung radioaktiver Verschmutzung an der Unterseite des Deckels zu verhindern.

8. Vorrichtung nach einem der vorstehenden Ansprüche, gekennzeichnet durch ein Kühlsystem für den Behälter (12), das einen Mantel (64) am Tragegestell (26) des Wagens aufweist, der den Behälter über die gesamte Höhe der Kühlrippen (66) umschließt, wodurch eine Zirkulation von Wasser im Raum zwischen dem Mantel und dem Behälter ermöglicht wird.

9. Vorrichtung nach einem oder mehreren der vorstehenden Ansprüche, dadurch gekennzeichnet, daß der Metallbalg (70) von unten mittels eines entfernbaren unteren Flansches (82), der die gesamte Vorrichtung in bekannter Weise trägt, demontiert werden kann, wodurch die Wartung des Metallbalges ermöglicht wird.

10. Vorrichtung nach einem oder mehreren der vorstehenden Ansprüche, dadurch gekennzeichnet, daß eine an sich bekannte Vorrichtung aus Spindelmutter (90) und Spindel (86) zum Verschieben des Metallbalges (70) vorgesehen ist, so daß eine wesentliche Verschiebung zwischen der Achse der Spindelmutter und der Achse der Spindel erfolgen kann, wodurch eine Verschiebung zwischen dem Wagen, der den Behälter trägt, und der Öffnung (20) ermöglicht wird, ohne die Dichtheit irgendwie zu beeinträchtigen.

11. Vorrichtung nach einem oder mehreren der vorstehenden Ansprüche, dadurch gekennzeichnet, daß eine eleastische Vorrichtung (98) zur Aufnahme der vertikalen Verschiebung des Behälters vorgesehen ist, die als Druckbegrenzer für die Verriegelung dient, in dem sie eine dem Zusammendrücken der elastischen Vorrichtung proportionale relative Verschiebung mittels eines Schaltnockens (102) mißt, der einen elektrischen Kontakt (104) berührt, der dann diese relative Verschiebung aufzeigt.

12. Vorrichtung nach einem oder mehreren der vorstehenden Ansprüche, gekennzeichnet durch einen Umdrehungszähler (126) an jeder Spindel (86) die die Verschiebung des Metallbalges bewirkt, um jede Ungleichmäßigkeit bei der Drehung der Spindeln (86) aufzunehmen und anzuzeigen, wobei die Ermittlung einer Ungleichmäßigkeit der Spindelsysteme zum Halt aller Spindelsysteme führt.

13. Vorrichtung nach einem oder mehreren der vorstehenden Ansprüche, gekennzeichnet durch eine von Hand zu betätigende Notsteuerung, die vorzugsweise mit allen Spindelsystemen (86) gekoppelt ist, um ein An- oder Abkoppeln des Behälters bezüglich der Öffnung (20) von Hand zu ermöglichen.

## Claims

1. A transportation, positioning and accosting device for a container of irradiated fuel underneath a loading and/or unloading pit and/or cell of a nuclear installation, of the type in which a container is disposed on a cart which is successively brought underneath a loading preparation station, underneath a removal station of the plug from the container, and underneath a penetration shaft providing the connection between said loading and/or unloading pit and/or cell and the hall where said cart circulates, said device being characterized in that said cart (10) is made of a framework (26) placed on a rolling platform (28) via a sliding and/or rolling support (30), and guided by side rails (32) and in that said container (12) is placed on said framework (26) via a plate (36) provided with means (38) for adjusting the altitude and horizontality of the upper face of said container (12), the positioning of the latter with respect to transverse and longitudinal axes being obtained with the assistance of a jig (40) fixed on the container frame and cooperating with guiding axes (42) carried by the cart head, and in that armoured protection plates (50, 56) are provided for reducing the radiations, during the container loading operations, and in that the tightness between said loading and/or unloading pit and the container is due to a double-walled metallic bellows (70) providing the continuity of the tightness at the level of the bearing surface of the container plug (14).

2. A device according to claim 1, characterized in that locking means are provided for allowing or suppressing said freedom for the cart lateral motions, obtained by said sliding and/or rolling support.

3. A device according to claim 1 or 2, characterized in that there are provided setting means for the positioning of the container along the longitudinal and transverse axes, whereby said means can be provided in the shape of screw-nut systems (44, 44') placed respectively in register with the upper (46) and lower (46') bearing studs of container (12), a resilient dumping system (48, 48') being moreover interposed between each container bearing stud and each screw-nut system for authorizing a displacement resulting from a radial expansion of the container.

4. A device according to any one of claims 1 through 3, characterized in that the armoured protection plates (50) are provided with manual or mechanized control means (52) for bringing said plates (50) nearer or away from each other, in order to close them onto each other, whereby said plates, when fitting into each other, cover the container upper face.

5. A device according to claim 4, characterized in that said armoured protection plates (50) are mounted on the upper portion of the framework of the cart so that a minimum spacing (e) be existing between the ceiling of the loading hall (H) and said protection plates, the value of said spacing being adjusted by a mechanical system (54)

6. A device according to claim 1, characterized in that an additional armoured protection (56) against radiations from the irradiated fuel is attached to the container, or attached and/or permanently fixed to the framework, in order to complete lacks of protection at the head of the container when its plug is removed.

7. A device according to any one of the preceding claims, characterized in that there is provided a support trestle (58) for plug (14), whereby said trestle is disposed on framework (26) and can include suction means (60) in order to avoid any dissemination of the contamination of the plug lower face.

8. A device according to any one of the preceding claims, characterized in that there is provided a cooling system for container (12), comprising a tubing (64) on the cart framework (26) covering the container, over the whole height of its cooling fins (66), a water circulation being provided in the space between said tubing and said container.

9. A device according to any one of the preceding claims, characterized in that the metallic bellows (70) can be disassembled from the bottom due to a lower flange (86) which can be disassembled and which maintains in position the whole system, known for the rest, which provides the fixation of said bellows.

10. A device according to any one of the preceding claims, characterized in that the device, of known type, made of a spherical collar nut (90) is designed in such manner as to accomodate a large off-set between the axis of said screw and that of the nut, and this in order to allow the displacement between the cart carrying the container and the penetration shaft (20) while maintaining the tightness.

11. A device according to any one of the preceding claims, characterized in that the risilient devices (98) used for absorbing the vertical expansion of the container are designed in such manner as to be used as locking effort limiters by measuring a relative displacement proportional to the deflection of the resilient device with the assistance of a cam (102) cooperating with an electrical contact (104) detecting said relative displacement.

12. A device according to any one of the preceding claims, characterized in that there is provided a revolution counter device (126), on each screw system (86) providing the displacement of the bellows, for detecting and signalling any desynchronization of the rotation of said screw systems, a detection of the desynchronization of a screw system causing the stoppage of all the other system.

13. A device according to any one of the preceding claims, characterized in that there is provided an emergency manual control which can be coupled to each screw system (86) for providing a manual coupling or uncoupling of the container with the penetration shaft (20).

Fig. 1A

Fig. 1B

Fig. 1c

Fig. 1D

Fig. 1E

Fig. 1F

Fig. 1G

Fig. 1H

9

Fig.2

Fig.3

EP 0 202 958 B1

FIG.4

FIG.5

FIG.9

EP 0 202 958 B1

Fig.6

Fig.7

EP 0 202 958 B1

Fig.8